# DEMANDE DE BREVET EUROPEEN

(11) **EP 2 068 071 A1**
(43) Date de publication de la demande: **10.06.2009**
(21) Numéro de dépôt: 08170277.1
(22) Date de dépôt: 28.11.2008
(51) Int. Cl.: F21V 14/08, F21W 111/10

(54) **Procédé d'adaptation automatique aux conditions de circulation d'un faisceau lumineux de module optique, et projecteur associé**

(30) Priorité: 03.12.2007 FR 0708431
(71) Demandeur: Valeo Vision, 93012 Bobigny Cedex (FR)
(72) Inventeur: Reiss, Benoît, 95600, EAUBONNE (FR); Fleury, Benoist, 94300, VINCENNES (FR); Grimm, Martin, 93340, LE RAINCY (FR); Vanden Driessche, Clément, 75015, PARIS (FR)

(57) **Abrégé**

La présente invention se rapporte à un procédé d'adaptation automatique d'un faisceau lumineux global (503) produit par un ensemble de modules optiques d'un premier véhicule automobile circulant sur une route, comprenant les étapes de :
- détecter la présence d'au moins un deuxième véhicule ;
- le cas échéant, déterminer une position latérale instantanée du deuxième véhicule sur la route ;
- faire évoluer le cache mobile (300) d'au moins un module optique autour de son axe sensiblement vertical (501), de manière à ce que ce ledit ensemble de modules optiques génère un faisceau lumineux comprenant une zone d'ombre éclairée latéralement de part et d'autre et correspondant à la position latérale instantanée du deuxième véhicule déterminée et située au-dessus de la ligne d'horizon.

## Description

La présente invention a pour objet un procédé d'adaptation automatique d'un faisceau lumineux, généré par au moins un projecteur de véhicule automobile, en fonction des conditions de circulation (présence de véhicule adverse, d'obstacle...) rencontrées par le véhicule considéré. Un but essentiel de l'invention est d'optimiser automatiquement, en fonction de différents éléments présents au voisinage du véhicule considéré ou sur la route empruntée par celui-ci, un faisceau lumineux global produit par un couple de projecteurs, composé d'un projecteur droit avant et d'un projecteur gauche avant, ou par un couple de modules optiques compris dans un même projecteur. L'adaptation proposée dans l'invention consiste en la génération d'une variation d'intensité lumineuse dans une direction bien précise, dans laquelle se situe un obstacle ou un véhicule adverse, croisé ou suivi ; la variation considérée peut se traduire soit par une mise en évidence d'un obstacle détecté sur lequel on souhaite attirer l'attention en éclairant plus fortement l'obstacle considéré par rapport à son voisinage en une augmentation, soit par une diminution de l'intensité lumineuse, uniquement dans la direction appropriée, lorsqu'il s'agit d'un véhicule adverse dont on ne souhaite pas éblouir le conducteur.

Le domaine de l'invention est, d'une façon générale, celui des projecteurs de véhicule automobile. Dans ce domaine, on connaît différents types de projecteurs classiques, parmi lesquels on trouve essentiellement :
- des feux de position, d'intensité et de portée faible ;
- des feux de croisement, ou codes, d'intensité plus forte et de portée sur la route avoisinant 80 mètres, qui sont utilisés essentiellement la nuit et dont la répartition du faisceau lumineux est telle qu'elle permet de ne pas éblouir le conducteur d'un véhicule croisé ; les faisceaux lumineux de type code sont diffèrent avec le type de circulation, à gauche ou à droite, dans laquelle ils sont utilisés ;
- des feux de route longue portée, dont la zone de vision sur la route avoisine 600 mètres, et qui doivent être éteints lorsque l'on croise un autre véhicule afin de ne pas éblouir son conducteur ;
- des feux anti-brouillard...

Par ailleurs, on connaît un type de projecteurs perfectionnés, cumulant les fonctions de feux de croisement et de feux longue portée. Cet exemple de réalisation est principalement mis en oeuvre dans les modules optiques de type elliptiques. Le projecteur comprend alors un module optique comprenant un réflecteur de type elliptique associé à une source lumineuse placée au premier foyer du réflecteur elliptique et d'une lentille placée au deuxième foyer de ce réflecteur. Pour que le module optique soit bi-fonction (cumulant les fonctions de feux de croisement et de feux longue portée), on peut par exemple disposer à l'intérieur du module optique, un cache amovible, constitué par exemple d'une plaque métallique, pouvant passer sur commande d'une première position dans laquelle il n'occulte pas le signal lumineux produit par la source lumineuse du module optique, la portée du projecteur correspondant alors à celle des feux de route, à une deuxième position dans laquelle il occulte une partie du signal lumineux produit par ladite source lumineuse, la portée du projecteur étant alors limitée à celle des feux de croisement. Le module optique doit, dans la deuxième position, engendrer un faisceau à coupure réglementaire correspondant à un faisceau de type code classique, la forme de la coupure étant donnée par la forme du cache interceptant une partie du signal lumineux.

Dans le but général d'améliorer le confort de conduite en terme de visibilité, il existe, dans l'état de la technique, des modules optiques bifonctions dont la commutation de la fonction code à la fonction route, et vice-versa, est automatique, ladite commutation dépendant des conditions de circulation. Avec des véhicules équipés de tels modules bifonctions, on procède à la recherche de la présence d'un véhicule susceptible d'être ébloui par une utilisation de la fonction route. Si aucun véhicule n'est détecté, la fonction route est automatiquement activée. Dès que la présence d'un véhicule est détectée, la fonction route est automatiquement désactivée, et le véhicule équipé du projecteur bifonctions présente de nouveau un faisceau lumineux de type code.

Dans la pratique, la valeur seuil à partir de laquelle l'absence de véhicule détecté autorise la commutation vers la fonction route est approximativement de 600 mètres. Dès qu'un véhicule est détecté à moins de 600 mètres du véhicule équipé, c'est la fonction code qui est activée. Or cette fonction n'assure un éclairage satisfaisant que sur une distance avoisinant 80 mètres au niveau de la partie centrale de la route, et de 150 mètres sur le bas-côtés de la voie ou circule le véhicule (soit le bas-côté droit dans le cadre d'un trafic à droite) ; l'éclairage réalisé étant ainsi essentiellement sur la droite de la route dans le cas d'une circulation à droite, le côté gauche de la chaussée étant nettement moins éclairé. II existe donc de nombreuses configurations de circulation, celles dans lesquelles le premier véhicule susceptible d'être ébloui est situé à plus d'une centaine de mètres et à moins de 600 mètres du véhicule équipé, pour lesquelles l'éclairage de la route pourrait être optimisé sans pour autant éblouir le conducteur d'un quelconque autre véhicule.

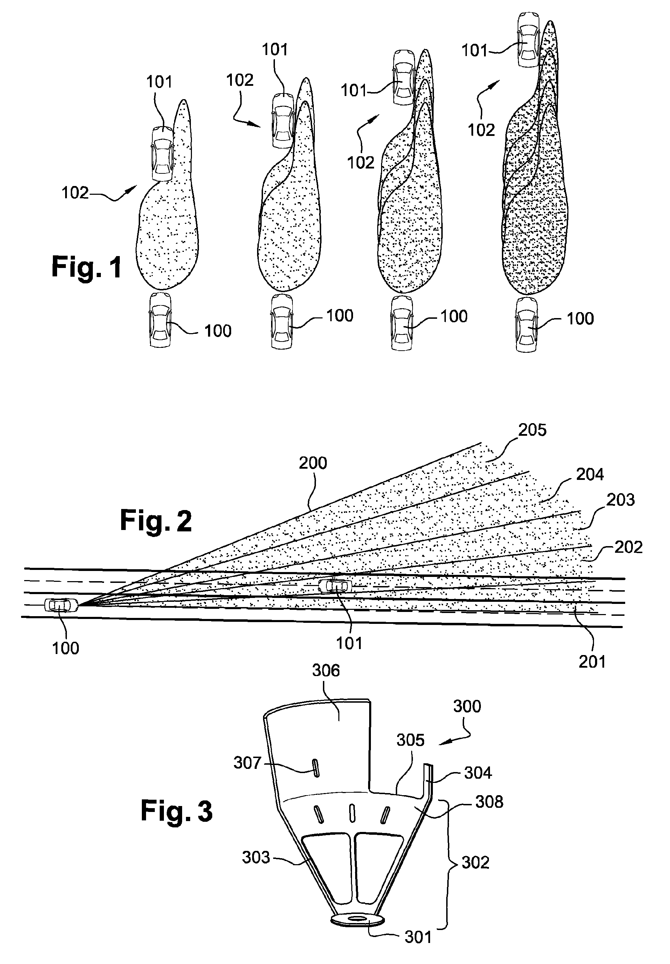

On a donc proposé, différentes solutions permettant d'adapter la portée du faisceau en fonction d'une distance estimée à laquelle se situe le véhicule croisé ou suivi. Le résultat d'une telle adaptation est représenté schématiquement à la figure 1, sur laquelle on a représenté un véhicule 100 qui adapte la portée du faisceau lumineux qu'il produit en fonction de l'éloignement d'un véhicule suivi 101. Si ces solutions sont satisfaisantes en terme d'optimisation de la portée du faisceau lumineux, elles ne le sont pas si on considère l'éclairage latéral de la route qui est proposé : comme on le voit sur la figure 1, une partie 102 de la route située à gauche du véhicule suivi 101 n'est pas éclairée, alors que la partie correspondante à droite du véhicule est éclairée.

Ainsi, en considérant la figure 2, il est apparu intéressant de découper un faisceau lumineux global 200 émis par lé véhicule 100 en différentes portions adjacentes, référencées 201 à 205, chaque portion correspondant à un secteur angulaire du faisceau global 200. Ainsi, si le véhicule croisé ou suivi 101 est présent dans la portion 202, un faisceau lumineux global optimisé consisterait à rendre non éblouissante uniquement la portion 202 du faisceau lumineux global 200. Par portion non éblouissante, on désigne un secteur angulaire du faisceau lumineux global dans lequel le faisceau est concentré uniquement sous la ligne d'horizon, lorsqu'il atteint, ou avant d'atteindre, le véhicule suivi ou croisé.

Dans l'état de la technique, on a proposé, pour atteindre un tel objectif, de réaliser un projecteur faisant intervenir une pluralité de diodes électroluminescentes (LEDs), disposées de telle sorte que chaque LED, ou groupe de LEDs, est plus particulièrement utilisé pour la production du faisceau lumineux dans une des portions du faisceau lumineux global ; pour créer une portion non éblouissante, il suffit alors d'intervenir sur les LEDs associées à la portion considérée, par exemple en les éteignant.

Mais une telle solution présente un certain nombre d'inconvénients :
d'une part, elle est coûteuse, du fait du nombre de LEDs utilisées. Ensuite, pour les mêmes raisons, elle est encombrante et lourde. Enfin, elle crée un phénomène de scintillement lorsque le véhicule passe d'une portion à l'autre.

L'état de la technique ne présente donc pas de solutions satisfaisantes pour réaliser une occultation d'une portion latérale d'un faisceau lumineux produit par un projecteur.

De même, il n'existe pas, dans l'état de la technique, de solution pour attirer l'attention du conducteur sur un obstacle, présent par exemple au bord de la route, au moyen des seuls faisceaux lumineux produits en proposant un éclairage de l'obstacle détecté plus important que l'éclairage des éléments directement voisins de l'obstacle considéré.

Ainsi, dans l'état de la technique, on n'a pas proposé de solutions satisfaisantes pour modifier l'éclairage, en terme d'intensité lumineuse, créé par un ou plusieurs dispositifs projecteurs, uniquement dans une direction limitée, déterminée par la présence d'un élément de type obstacle ou véhicule adverse, correspondant à une portion latérale d'un faisceau lumineux global.

C'est un objet de l'invention de répondre au problème qui vient d'être mentionné. Dans l'invention, on propose de réaliser, de manière non encombrante et peu coûteuse, la génération d'un faisceau lumineux dont l'intensité émise dans une portion latérale est différente de l'intensité émise dans des portions latérales voisines, soit pour mettre en évidence un obstacle, soit pour éviter l'éblouissement des conducteurs des véhicules adverses.

Par exemple, dans l'objectif de réaliser un faisceau non éblouissant, on propose de détecter la présence d'au moins un véhicule croisé ou suivi, de déterminer son positionnement latéral sur la route, puis de générer un faisceau lumineux global qui ne crée pas d'éblouissement pour le véhicule adverse considéré, en proposant l'utilisation d'un cache particulier disposé dans au moins un des modules optiques d'au moins un des projecteurs du véhicule considéré. Le cache particulier est mobile en rotation autour d'un axe sensiblement vertical ; il présente, en fonction des modes de réalisation du dispositif selon l'invention, différents moyens d'occultation d'une portion latérale d'un faisceau lumineux généré, l'occultation étant réalisée notamment au-dessus d'une ligne située entre la ligne d'horizon et une ligne limite située à environ un pourcent sous la ligne d'horizon.

La présente invention concerne donc un procédé d'adaptation automatique d'un faisceau lumineux global produit par un ensemble de modules optiques d'un premier véhicule automobile circulant sur une route, ledit ensemble de modules optiques étant composé d'au moins un premier module optique et un deuxième module optique, au moins ledit premier module optique étant un module optique selon la présente invention.

Préférentiellement, ledit procédé d'adaptation automatique d'un faisceau lumineux global selon la présente invention est produit par un ensemble de modules optiques d'un premier véhicule automobile circulant sur une route, l'ensemble de modules optiques étant apte à réaliser au moins une fonction d'éclairage et étant composé d'au moins deux modules optiques, au moins l'un des modules optiques comprenant au moins une source lumineuse disposée au sein d'un réflecteur, un cache mobile en rotation autour d'un axe sensiblement vertical, ledit cache mobile présentant au moins un élément occultant. Le procédé comprend les étapes de :
- détecter la présence d'au moins un deuxième véhicule, suivi ou croisé, à ne pas éblouir ;
- le cas échéant, déterminer une position latérale instantanée du deuxième véhicule sur la route ;
- faire évoluer le cache mobile d'au moins un module optique équipé d'un cache mobile en rotation autour de son axe sensiblement vertical, de manière à ce que ledit élément occultant occulte une portion de la lumière émise par ladite source lumineuse, de manière à ce que ce ledit ensemble de modules optiques génère un faisceau lumineux comprenant une zone d'ombre éclairée latéralement de part et d'autre, ladite zone d'ombre correspondant à la position latérale instantanée du deuxième véhicule déterminée et située au-dessus de la ligne d'horizon.

On voit que par un tel procédé, il est possible d'avoir un faisceau avec une zone d'ombre positionnée sur le véhicule à ne pas éblouir, tout en permettant d'éclairer l'autre voie, que celle sur laquelle circule ce deuxième véhicule, ainsi que le bas côté de la voie sur laquelle il circule.

Le procédé selon l'invention peut également présenter, outre les caractéristiques principales énoncées dans le paragraphe précédent, une ou plusieurs des caractéristiques complémentaires suivantes ; toute combinaison de ces caractéristiques complémentaires, dans la mesure où elles ne s'excluent pas mutuellement, constitue un exemple avantageux de mise en oeuvre de l'invention:
- l'un des modules optiques est disposé dans un projecteur gauche et l'autre module optique est disposé dans un projecteur droit ;
- l'élément occultant présente une hauteur suffisante pour générer la zone d'ombre au-dessus d'une ligne située entre la ligne d'horizon et une ligne limite située à environ un pourcent sous la ligne d'horizon ;
- l'élément occultant présente une hauteur limitée pour n'occulter aucune portion du faisceau lumineux en dessous d'une ligne située entre la ligne d'horizon et une ligne limite située à environ un pourcent sous la ligne d'horizon ;
- chacun des modules optiques est équipé d'un cache mobile en rotation autour d'un axe sensiblement vertical ;
- le cache mobile est entraîné en rotation par un moteur pas à pas ;
- l'élément occultant est une plaque occultante pleine apte à occulter, dans le faisceau lumineux produit par le module optique auquel appartient la plaque occultante considérée, une partie du faisceau lumineux générée au-dessus de la ligne d'horizon ;
- chaque plaque occultante présente une extrémité latérale avec au moins une portion oblique, le procédé comportant l'étape consistant à disposer les caches mobiles de manière à créer, dans le faisceau lumineux global, une zone éclairée située en dessous du deuxième véhicule, la zone d'ombre présentant une forme évasée dont les bords s'écartent depuis le dessous du deuxième véhicule pour remonter vers le haut ; la forme évasée peut par exemple être en forme projetée triangulaire, mais dont le sommet est orienté vers le bas, ou bien un trapèze dont le petit côté est situé en bas ;
- les caches mobiles sont actionnés selon une rotation en sens inverse d'un module optique à l'autre, de manière à ce que le bas de la forme évasée de la zone d'ombre suive le dessous du deuxième véhicule lorsqu'il s'approche ou s'éloigne du premier véhicule ;
- le procédé met en oeuvre un module optique tel qu'exposé ci-après ;
- les deux modules optiques sont disposés dans un unique projecteur ;

L'invention se rapporte également à un module optique générant un faisceau lumineux, ledit module optique étant équipé d'au moins une source lumineuse disposée au sein d'un réflecteur, le module optique comportant notamment un cache mobile en rotation autour d'un axe sensiblement vertical, ledit cache mobile présentant au moins un élément apte à modifier le faisceau lumineux en provoquant une discontinuité latérale dans l'intensité lumineuse du faisceau lumineux généré.

Par l'expression "discontinuité latérale dans l'intensité lumineuse du faisceau lumineux généré", on désigne le fait qu'on crée, au moyen du cache mobile, une portion latérale du faisceau lumineux qui est, de façon visible, plus lumineuse ou moins lumineuse que les portions latérales adjacentes dudit faisceau lumineux.

Avantageusement, la discontinuité latérale en terme d'intensité lumineuse est appliquée au niveau d'une portion latérale qui n'est pas située à une des extrémités du faisceau lumineux produit, c'est-à-dire une portion latérale du faisceau lumineux encadrée par des portions latérales qui sont elles-mêmes éclairées.

Le module optique selon l'invention est préférentiellement apte à mettre en oeuvre le procédé d'adaptation automatique d'un faisceau lumineux global selon la présente invention. Dans un tel cas, il peut présenter en outre des caractéristiques complémentaires suivantes ; toute combinaison de ces caractéristiques complémentaires, dans la mesure où elles ne s'excluent pas mutuellement, constitue un exemple avantageux de réalisation de l'invention:
- la partie saillante est disposée à une première extrémité latérale du cache mobile ;
- la partie saillante présente une hauteur supérieure à sa largeur ;
- un élément du cache mobile apte à modifier le faisceau lumineux est constitué par une plaque occultante présentant une ouverture, notamment une fente de forme sensiblement rectangulaire, la plaque occultante étant apte à ne laisser passer le faisceau lumineux qu'au niveau de la fente.
   Un autre objet de l'invention est un projecteur de véhicule automobile comprenant au moins un module optique selon l'invention et/ou apte à mettre en oeuvre un procédé selon la présente invention avec leurs caractéristiques principales précédemment précisées, et éventuellement une ou plusieurs caractéristiques complémentaires qui viennent d'être mentionnées.
   Un autre objet de l'invention est un véhicule automobile apte à mettre en oeuvre le procédé selon l'invention, ou équipé d'au moins un projecteur selon l'invention, avec leurs caractéristiques principales précédemment précisées, et éventuellement une ou plusieurs caractéristiques complémentaires qui viennent d'être mentionnées.
   Selon une variante de réalisation le véhicule selon l'invention peut également présenter une partie oblique située à gauche de la plaque occultante dans l'un des modules optiques et à droite de la plaque occultante dans l'autre module optique.
   L'invention et ses différentes applications seront mieux comprises à la lecture de la description qui suit et à l'examen des figures qui l'accompagnent.
   Celles-ci ne sont présentées qu'à titre indicatif et nullement limitatif de l'invention.
- à la figure 1, déjà décrite, un exemple de mise en oeuvre de procédé d'adaptation d'un faisceau lumineux généré par un véhicule en fonction de la distance à laquelle se situe un véhicule adverse ;
- à la figure 2, également déjà décrite, une représentation schématique d'un découpage d'un faisceau lumineux global en différentes portions latérales pour illustrer une possibilité d'amélioration des faisceaux lumineux globaux produits ;
- à la figure 3, un premier exemple de réalisation d'un cache mobile équipant les modules optiques selon l'invention ;
- à la figure 4, une représentation schématique en coupe de la mise en place du cache mobile de la figure 3 au sein d'un module optique ;
- aux figures 5-A et 5-B, une représentation schématique de la mise en place du cache mobile de la figure 3 au sein d'un module optique, et une représentation schématique du faisceau lumineux produit par un tel module optique ;
- à la figure 6, un deuxième exemple de réalisation d'un cache mobile équipant un module optique selon l'invention ;
- aux figures 7-A à 7-E, différentes représentations illustrant un exemple de mise en oeuvre du procédé selon l'invention avec le cache mobile de la figure 6 ;
- aux figures 8-A et 8-B, un troisième exemple de réalisation d'un cache mobile équipant un module optique selon l'invention ;
- aux figures 9-A à 9-C, différentes projections de faisceaux lumineux illustrant un premier exemple de mise en oeuvre du procédé selon l'invention avec le cache mobile des figures 8-A et 8-B ;
- aux figures 10-A à 10-C, différentes projections de faisceaux lumineux illustrant un deuxième exemple de mise en oeuvre du procédé selon l'invention avec le cache mobile des figures 8-A et 8-B ;
- aux figures 11-A à 11-C, différentes projections de faisceaux lumineux illustrant un troisième exemple de mise en oeuvre du procédé selon l'invention avec le cache mobile des figures 8-A et 8-B ;
- aux figures 12-A à 12-C, différentes représentations illustrant un exemple de mise en oeuvre du procédé selon l'invention avec un quatrième exemple de réalisation d'un cache mobile équipant un module optique selon l'invention ;

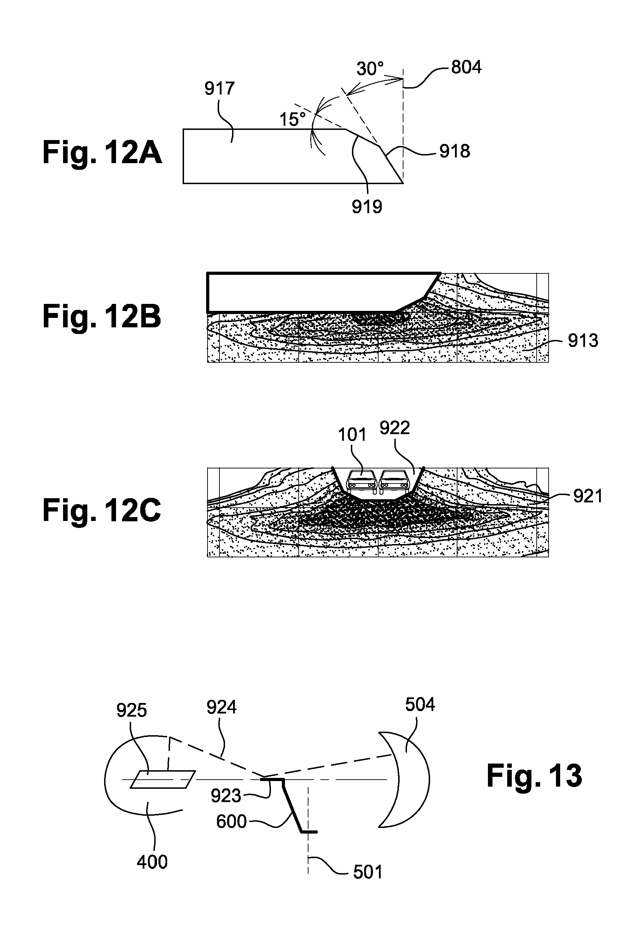

- à la figure 13, un exemple de réalisation particulier d'un cache mobile comportant un élément de type plieuse, équipant les modules optiques selon l'invention.

Les éléments apparaissant sur différentes figures conservent, sauf précision contraire, les mêmes références. Les différentes désignations de position, par exemple "en-dessous", "au-dessus", "vertical" doivent être considérées dans des conditions normales de circulation sur route, ou d'utilisation du dispositif selon l'invention, lorsque celui-ci est installé pour fonctionner sur un véhicule automobile.

Les projecteurs qui vont être décrits ne font intervenir qu'un unique module optique selon la présente invention. Néanmoins on peut envisager de placer au moins deux modules optiques selon l'invention, notamment tels que les modules optiques décrits ci-après. Par module optique, on désigne ici un système optique comprenant au moins une source lumineuse, éventuellement disposée dans un réflecteur, et éventuellement associée à un ou plusieurs éléments dioptriques du type lentille.

Dans la description qui suit, la ligne de coupure des faisceaux lumineux représentés est parfois confondue avec la ligne d'horizon ; dans la pratique, cette ligne de coupure est située entre la ligne d'horizon et une ligne limite située à environ un pourcent sous la ligne d'horizon.

Pour permettre à un premier véhicule, mettant en oeuvre le procédé selon l'invention, d'optimiser l'éclairage d'une route sans éblouir un éventuel autre véhicule, il est nécessaire, dans un premier temps, de déterminer la présence de cet autre véhicule, et de déterminer sa position latérale instantanée, c'est-à-dire de déterminer dans quelle portion latérale du faisceau lumineux global produit se trouve cet autre véhicule.

A cet effet, on prévoit la mise en oeuvre de moyens d'évaluation de position latérale connus, mettant en oeuvre par exemple une ou plusieurs caméras embarquées dans le véhicule, associées à des moyens logiciels de traitement d'images.

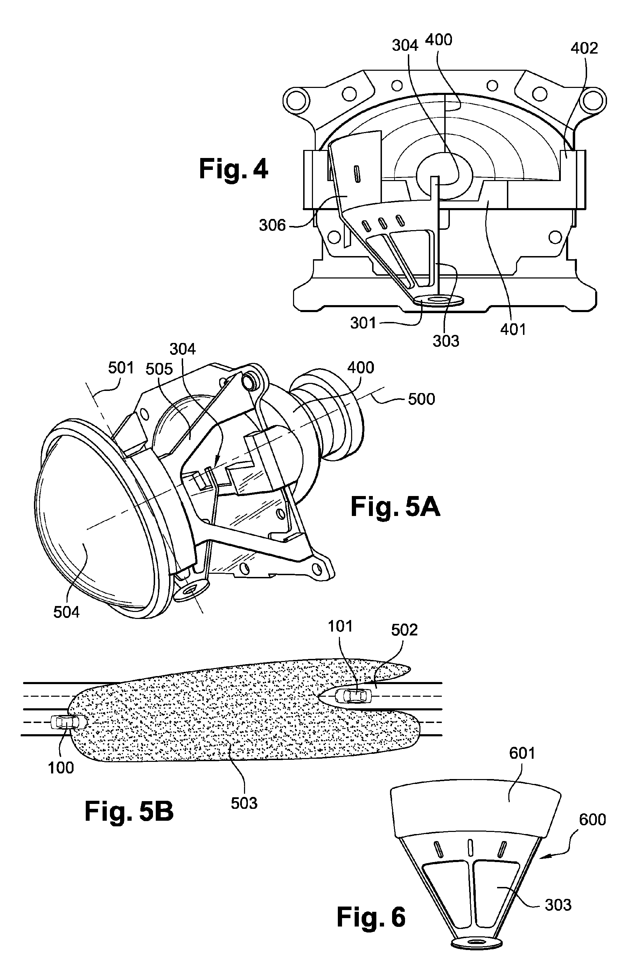

La figure 3 montre un premier exemple de réalisation d'un cache mobile 300 intervenant dans des dispositifs projecteurs selon l'invention. Les figures 4 et 5-A montrent, respectivement en coupe et en perspective, le cache mobile 300 mis en place au sein d'un module optique 500.

Le cache 300, visible sur ces différentes figures, comporte essentiellement les éléments suivants :
- un support 301 en forme de portion de cône renversé. Le support 301, une fois le cache 300 disposé au sein d'un module optique 500 (figure5-A), n'occulte aucune partie du faisceau lumineux produit par une source lumineuse disposée au sein d'un réflecteur 400. Le support 301 présente un pied de support 302 en forme d'anneau, formant le sommet tronqué du cône, et une paroi latérale oblique 303. Le pied de support est destiné à recevoir une tige d'entraînement, non représentée, permettant la mise en mouvement du cache 300 autour d'un axe rotation 501 (figure 5-A) sensiblement vertical. Le mouvement de la tige d'entraînement est provoqué et contrôlé par un moteur de type moteur pas à pas, permettant d'obtenir une grande précision dans les déplacements en rotation du cache mobile 300.
- des éléments aptes à modifier un faisceau lumineux global 503 (figure 5-B) émis par les projecteurs du véhicule en provoquant une discontinuité latérale dans l'intensité lumineuse du faisceau lumineux généré par le module optique. Ces éléments sont disposés au niveau d'une partie supérieure 305 de la paroi latérale oblique 303. Dans le cache mobile 300, deux éléments de ce type sont présents :

- un premier élément est constitué par une partie saillante 304, désignée comme languette ; comme visible à la figure 4, la languette 304, lorsqu'elle est placée face à la source lumineuse, occulte une portion latérale 502 (figure 5-B) du faisceau lumineux 503, permettant ainsi de ne pas éblouir le conducteur du véhicule adverse 101. Dans l'exemple représenté, la languette 304 présente une hauteur limitée de manière à occulter le faisceau lumineux dans la portion latérale 502 au moins au-dessus de la ligne d'horizon, préférentiellement au plus au-dessus d'une ligne limite située à environ un pourcent au-dessous de la ligne d'horizon. Plus la languette 304 est large, plus la portion latérale 502 non éblouissante, ou zone d'ombre, est de taille importante. Avantageusement, la languette 304 est située au niveau d'une extrémité latérale 308 de la partie supérieure 305 de la paroi latérale 303.
- un deuxième élément est constitué par une plaque occultante 306 de hauteur et de largeur suffisante pour occulter totalement le faisceau lumineux produit ; la plaque occultante 306 comporte une ouverture 307, en forme de fente verticale, située sensiblement en son centre ; ainsi, lorsque la plaque 306 occulte les rayons lumineux issus de la source lumineuse, seuls ceux émis vers la fente 307 forment le faisceau lumineux produit. Le deuxième élément 306 peut ainsi être utilisé pour attirer l'attention sur un obstacle détecté, en plaçant le cache de telle sorte que l'obstacle détecté soit atteint par les signaux lumineux traversant la fente 307. Ces signaux lumineux peuvent éventuellement être superposés à un faisceau lumineux produit par un autre module optique, créant une portion latérale, correspondant à la direction de l'obstacle, plus lumineuse que les portions latérales voisines.

Comme visible à la figure 4, le cache 300 est monté face au réflecteur 400 du module optique 500, en étant centré horizontalement par rapport à celui-ci. La partie supérieure 305 du cache 300 marque la limite au-delà de laquelle les éléments du cache 300 sont susceptibles d'occulter des signaux lumineux produits par la source lumineuse : tout élément placé au-dessus de la partie supérieure 305, s'il est disposé face à la source lumineuse, provoque une occultation d'une portion latérale du faisceau lumineux produit. Avantageusement, le mouvement en rotation du cache 300 est guidé par une pièce de guidage 402, présentant notamment une partie courbée 401 épousant la forme de la partie supérieure 305 de la paroi latérale 303. La forme du cache 300 permet notamment de ne pas encombrer de manière significative le module optique 500. Sa présence n'a pas de conséquence significative sur la taille du module optique 500, comme montré à la figure 5 sur laquelle on a représenté le module optique 500 avec une lentille de projection 504 maintenue par un support 505.

Le cache mobile 300 peut avantageusement être disposé simultanément dans un module optique du projecteur droit du véhicule et dans un module optique du projecteur gauche du véhicule ; une fois la position du véhicule adverse 101 détectée, chacun des caches mobiles est alors positionné pour, dans chaque faisceau lumineux produit, occulter au moyen de la languette 304 la portion latérale correspondant au positionnement latéral déterminé pour le véhicule adverse 101.

La figure 6 montre un deuxième exemple de réalisation d'un cache mobile 600 intervenant dans des modules optiques selon l'invention.

Le cache mobile 600 comporte essentiellement les éléments suivants :
- le support 301 identique à celui du cache mobile 300 ;
- une plaque occultante pleine 601 constituant un élément apte à modifier un faisceau lumineux en provoquant une discontinuité latérale dans l'intensité lumineuse du faisceau lumineux généré par le module optique dans lequel il est disposé. La plaque occultante 601 présente avantageusement une hauteur limitée pour n'occulter, lorsqu'elle est disposée directement face à la source lumineuse, que les rayons lumineux constituant la partie du faisceau lumineux située au moins au-dessus de la ligne d'horizon et au plus au-dessus d'une ligne limite située à environ un pourcent au-dessous de la ligne d'horizon.

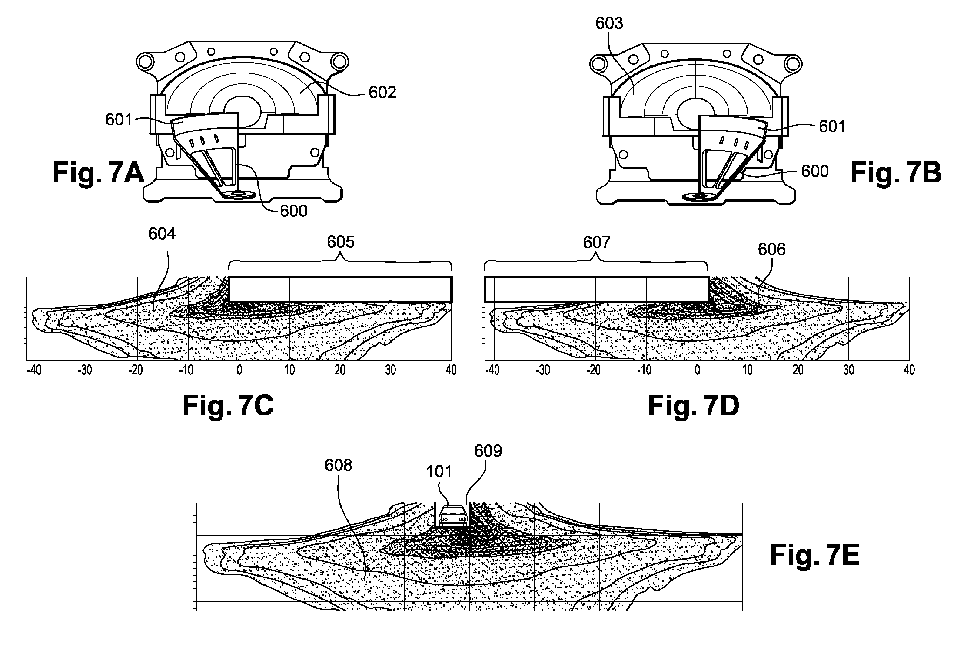

Dans un mode de mise en oeuvre avantageux de l'invention, illustré aux figures 7-A à 7-E, on dispose le cache 600 à la fois dans le module optique d'un projecteur gauche 602 et dans le module optique d'un projecteur droit 603. Une fois la position latérale du véhicule adverse 101 déterminée, les caches mobiles 601 sont positionnés pour :
- dans le module optique du projecteur gauche 602, produire un faisceau lumineux gauche 604, présentant une portion latérale occultée 605 s'étendant, depuis le côté gauche du véhicule adverse 101, sur toute la partie droite du faisceau lumineux gauche 604 ;
- dans le module optique du projecteur droit 603, produire un faisceau lumineux gauche 606, présentant une portion latérale occultée 607 s'étendant, depuis le côté droit du véhicule adverse 101, sur toute la partie gauche du faisceau lumineux droit 604.

En superposant le faisceau lumineux gauche 604 et le faisceau lumineux droit 606, on obtient ainsi un faisceau lumineux global 608, ne présentant qu'une zone d'ombre 609, c'est-à-dire une portion latérale non éblouissante, correspondant à la position du véhicule 101.

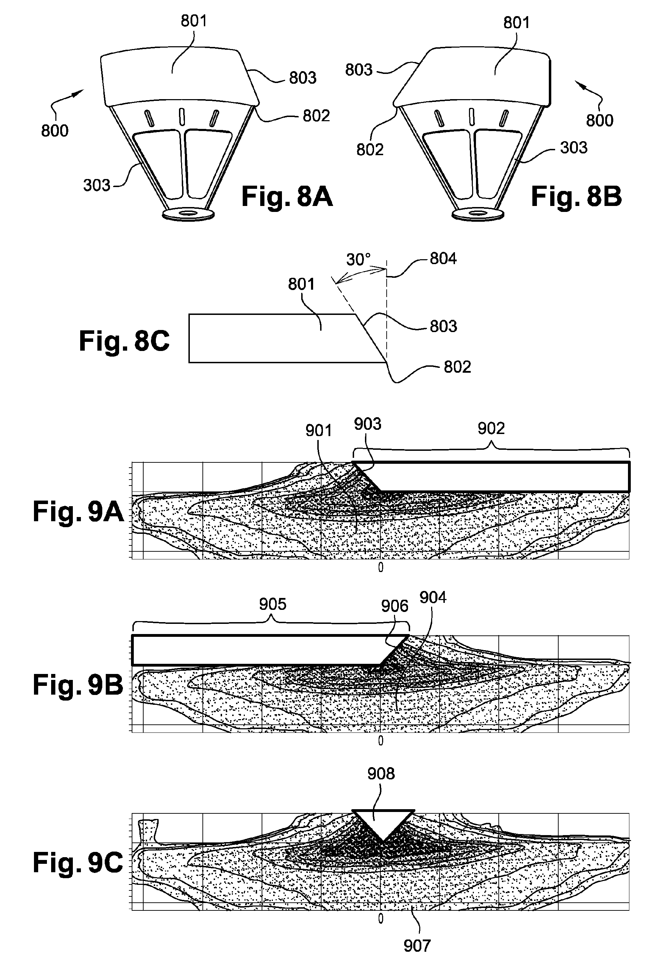

Les figures 8-A et 8-B montrent un troisième exemple de réalisation d'un cache mobile 800 intervenant dans modules optiques selon l'invention.

Le cache mobile 800 comporte essentiellement les éléments suivants :
- le support 301 identique à celui du cache mobile 300 ;
- une plaque occultante pleine 801, identique à la plaque occultante 601 du deuxième exemple décrit, la différence entre la plaque occultante 601 et la plaque occultante 801 résidant dans la forme de leur extrémité latérale intérieure 802, c'est-à-dire de l'extrémité latérale disposée vers l'autre module optique que celui dans lequel le cache considéré est disposé. Dans cet exemple, l'extrémité latérale intérieure 802 des plaques occultantes 801 est oblique, présentant un angle de 30 degrés environ par rapport à un axe vertical 804. Avantageusement, les plaques occultantes 801 sont symétriques l'une par rapport à l'autre par rapport à un plan sensiblement perpendiculaire.

Comme illustré aux figures 9-A à 9-C, une telle forme de cache mobile 800 permet d'obtenir, une fois les caches positionnés de manière appropriée :
- dans un module optique du projecteur gauche, un faisceau lumineux gauche 901, présentant une portion latérale occultée 902 s'étendant, depuis le côté gauche du véhicule adverse 101, sur toute la partie droite du faisceau lumineux gauche 901 ; la transition entre la partie occultée 902 et la partie non occultée est réalisée selon une coupure oblique 903.
- dans un module optique du projecteur droit, un faisceau lumineux droit 904, présentant une portion latérale occultée 905 s'étendant, depuis le côté droit du véhicule adverse 101, sur toute la partie gauche du faisceau lumineux droit 904 ; la transition entre la partie occultée 905 et la partie non occultée est réalisée selon une coupure oblique 906.

En superposant le faisceau lumineux gauche 901 et le faisceau lumineux droit 904, on obtient ainsi un faisceau lumineux global 907, ne présentant qu'une zone d'ombre ou portion latérale non éblouissante 908, correspondant à la position du véhicule 101. La portion latérale non éblouissante présente une projection de forme triangulaire, avec un sommet orienté vers le bas. On limite ainsi, par rapport au précédent exemple décrit, la portion du faisceau lumineux global occultée, en éclairant une partie du bas du véhicule adverse 101.

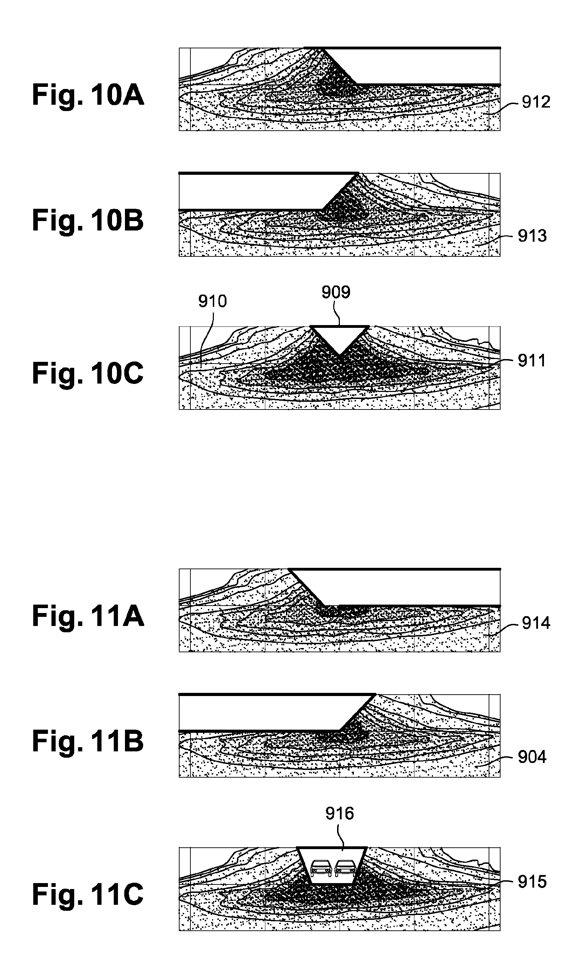

La forme du cache mobile 800 permet également, comme montré aux figures 10-A à 10-C, d'obtenir, en superposant le faisceau lumineux droit 913 (figure 10-B) dont la portion latérale occultée a été légèrement décalée vers la gauche par rapport à une position centrale et un faisceau lumineux gauche 912 (figure 10-A) dont la portion latérale occultée a été légèrement décalée vers la droite par rapport à une position centrale, on obtient un faisceau lumineux global 911 (figure 10-C) avec une zone d'ombre 909, toujours de forme projetée triangulaire, mais dont le sommet 910 orienté vers le bas est disposé plus haut, comparé au faisceau global obtenu par des faisceaux droit et gauche ayant des positions centrales comme ceux représentés en figures 9-A à 9-C. Ainsi par le mouvements des caches mobiles, il est possible de faire évoluer ledit sommet 910 vers le haut ou vers le bas, permettant ainsi de s'adapter de manière optimale à la distance du véhicule adverse : plus le véhicule adverse est éloigné, ledit éloignement étant déterminé au moyen de capteurs spécifiques, plus le sommet 910 est déplacé vers le haut. Préférentiellement, le sommet 910 évolue entre une ligne limite située à environ un pourcent au-dessous de la ligne d'horizon et la ligne d'horizon.

Dans un autre exemple, illustré aux figures 11-A à 11-C, en superposant le faisceau lumineux droit 904 (figure 11-B) et un faisceau lumineux gauche 914 dont la portion latérale occultée a été légèrement décalée vers la gauche par rapport à une position centrale, on obtient un faisceau lumineux global 915 avec une zone d'ombre ou portion latérale non éblouissante 916 de forme globalement trapézoïdale, et légèrement excentrée sur la gauche. La portion latérale non éblouissante 916 peut alors, comme représenté, présenter une largeur suffisante pour que plusieurs véhicules adverses y soient contenus.

La figure 12-A montre un quatrième exemple de cache mobile, comparable au cache mobile 800, mais avec une plaque occultante 917 dont la forme de l'extrémité latérale intérieure présente, en partant de la base de la plaque occultante, une première portion oblique 918 formant un angle de 30 degrés environ par rapport à l'axe vertical 804, prolongée par une deuxième portion oblique 919, formant un angle de 15 degrés environ par rapport à l'axe vertical 804.

Le cache mobile équipé de la plaque occultante 917 permet d'obtenir un faisceau lumineux projeté droit 920, visible à la figure 12-B, présentant une ligne de coupure où les deux portions obliques se retrouvent au niveau de la frontière marquant le début de la portion latérale non éblouissante.

En superposant le faisceau lumineux droit 920 avec un faisceau lumineux gauche obtenu avec un cache comportant la plaque occultante 917, on obtient un faisceau lumineux global 921 présentant une zone d'ombre 922 de dimension réduite par rapport aux précédents exemples détaillés.

Dans un mode de réalisation particulier, les modules optiques selon l'invention sont avantageusement mobiles pour éclairer au mieux la route empruntée lorsque celle-ci présente un virage ; par exemple, ils peuvent être équipés de la fonction DBL (Dynamic Bending Light en langue anglaise, connue sous l'appellation "code virage"). Le cache mobile associé aux modules selon l'invention suit alors le mouvement du module optique pour modifier le faisceau lumineux dans la portion latérale appropriée. Le cache mobile et le module optique présentent avantageusement deux mouvements autonomes, dont les caractéristiques sont déterminées et gérées par un calculateur embarqué.

Avantageusement, comme montré à la figure 13, le cache mobile décrit, quel que soit sa forme, peut présenter un élément de type plieuse 923, connu de l'homme du métier, permettant de récupérer une partie 924 des rayons lumineux produits par une source lumineuse 925 du module optique associé au cache considéré, pour les réfléchir et que ceux-ci contribuent à la formation du faisceau lumineux produit. De façon préférée, la plieuse est disposée au niveau de l'extrémité supérieure du cache mobile, en étant positionnée de façon sensiblement horizontale. Avantageusement, le cache mobile et sa plieuse forment une pièce monobloc. On peut également, dans un cas non représenté, avoir une plieuse fixe positionnée entre le cache tournant et la source lumineuse.

Il est à noter que la forme triangulaire de la zone d'ombre 908, 909 des figures 9-A à 9-C et des figures 10-A à 10-C est représentée à titre illustratif. On pourrait avoir des caches mobiles avec une pente descendante comme la pente 803 mais de forme non droite. Chaque faisceau lumineux d'un module optique présenterait alors une zone d'ombre avec une pente ascendante. En orientant les caches mobiles, il serait possible d'avoir une zone éclairée située en dessous du deuxième véhicule, la zone d'ombre présentant une forme évasée dont les bords s'écartent depuis le dessous du deuxième véhicule pour remonter vers le haut. En d'autres termes, la forme évasée présenterait des bords de la forme de la pente 803 situés de part et d'autre du ou des véhicules. Par exemple, sur la figure 12-A, la forme de la pente est constituée par les deux pentes 919 et 918, permettant de générer une zone d'ombre 922 en forme de coupe. On pourrait également envisager une pente courbe. En actionnant les caches mobiles selon une rotation en sens inverse d'un module optique à l'autre, les pentes des zones d'ombre des faisceau lumineux de chaque module optique vont se superposer plus ou moins, de manière à ce que le bas de la forme évasée de la zone d'ombre du faisceau global suivra le dessous du deuxième véhicule, suivi ou arrivant en sens opposé, lorsqu'il s'approchera ou s'éloignera du premier véhicule.

Bien que dans les modes de réalisations préférés, on utilise au moins deux modules optiques selon la présente invention, il est également possible de combiner les faisceaux lumineux d'un module optique selon la présente invention et d'un module optique avec un cache sans rotation selon un axe sensiblement vertical. Dans ce cas, la variation de la discontinuité latérale est faite par la rotation du cache mobile du module optique selon la présente invention, par rapport à la discontinuité latérale fixe du module optique avec cache sans rotation selon un axe sensiblement vertical.

Les sources lumineuses utilisées dans la présente invention peuvent être, de manière non limitative, des lampes à décharge, des diodes électroluminescentes, ou des lampes à incandescence.

## Revendications

1. Procédé d'adaptation automatique d'un faisceau lumineux global (503) produit par un ensemble de modules optiques d'un premier véhicule automobile (100) circulant sur une route, ledit ensemble de modules optiques étant apte à réaliser au moins une fonction d'éclairage et étant composé d'au moins deux modules optiques, au moins l'un des modules optiques (500) comprenant au moins une source lumineuse disposée au sein d'un réflecteur (400), un cache mobile (300 ; 600 ; 800) en rotation autour d'un axe sensiblement vertical (501), ledit cache mobile présentant au moins un élément occultant (304 ; 601 ; 801 ; 917) ;
**caractérisé en ce que** le procédé comprenant les étapes de :
- détecter la présence d'au moins un deuxième véhicule (101), suivi ou croisé, à ne pas éblouir ;
- le cas échéant, déterminer une position latérale instantanée du deuxième véhicule (101) sur la route ;
- faire évoluer le cache mobile (300) d'au moins un module optique équipé d'un cache mobile en rotation autour de son axe sensiblement vertical (501), de manière à ce que ledit élément occultant occulte une portion de la lumière émise par ladite source lumineuse, de manière à ce que ce ledit ensemble de modules optiques génère un faisceau lumineux comprenant une zone d'ombre (502 ; 609 ; 909 ; 908 ; 916 ; 922) éclairée latéralement de part et d'autre, ladite zone d'ombre correspondant à la position latérale instantanée du deuxième véhicule (101) déterminée et située au-dessus de la ligne d'horizon.

2. Procédé selon la revendication précédente **caractérisé en ce que** l'un des modules optiques est disposé dans un projecteur gauche et l'autre module optique est disposé dans un projecteur droit.

3. Procédé selon l'une au moins des revendications 1 à 2 **caractérisé en ce que** ledit élément occultant (304 ; 601 ; 801 ; 917) présente une hauteur suffisante pour générer ladite zone d'ombre (502 ; 609 ; 909 ; 908 ; 916 ; 922) au-dessus d'une ligne située entre la ligne d'horizon et une ligne limite située à environ un pourcent sous la ligne d'horizon.

4. Procédé selon l'une quelconque des revendications 1 à 3 **caractérisé en ce que** ledit élément occultant (304 ; 601 ; 801 ; 917) présente une hauteur limitée pour n'occulter aucune portion du faisceau lumineux en dessous d'une ligne située entre la ligne d'horizon et une ligne limite située à environ un pourcent sous la ligne d'horizon.

5. Procédé selon l'une quelconque des revendications 1 à 4, **caractérisé en ce que** chacun des modules optiques est équipé d'un cache mobile (300 ; 600 ; 800) en rotation autour d'un axe sensiblement vertical (501).

6. Procédé selon l'une quelconque des revendications selon l'une quelconque des revendications 1 à 5 **caractérisé en ce que** le cache mobile est entraîné en rotation par un moteur pas à pas.

7. Procédé selon l'une quelconque des revendications 1 à 6, **caractérisé en ce que** ledit élément occultant est une plaque occultante (601, 801, 917) pleine apte à occulter, dans le faisceau lumineux produit par le module optique auquel appartient la plaque occultante considérée, une partie (902, 905) du faisceau lumineux générée au-dessus de la ligne d'horizon.

8. Procédé selon la revendication 7, **caractérisé en ce que** chaque plaque occultante (801, 917) présente une extrémité latérale avec au moins une portion oblique (803 ; 918), ledit procédé comportant l'étape consistant à disposer les caches mobiles de manière à créer, dans le faisceau lumineux global, une zone éclairée située en dessous du deuxième véhicule, ladite zone d'ombre (908 ; 909 ; 916 ; 922) présentant une forme évasée dont les bords s'écartent depuis le dessous dudit deuxième véhicule (101) pour remonter vers le haut.

9. Procédé selon la revendication 8, **caractérisé en ce que** les caches mobiles (800) sont actionnés selon une rotation en sens inverse d'un module optique à l'autre, de manière à ce que le bas de la forme évasée de la zone d'ombre (908, 909) suive le dessous dudit deuxième véhicule (101) lorsqu'il s'approche ou s'éloigne dudit premier véhicule (100).

10. Module optique (500) apte à mettre en oeuvre le procédé d'adaptation automatique d'un faisceau lumineux global selon l'une quelconque des revendications 1 à 6, **caractérisé en ce que** la partie saillante (304) est disposée à une première extrémité latérale (308) du cache mobile (300).

11. Module optique (500) selon la revendication 10 **caractérisé en ce que** la partie saillante (304) présente une hauteur supérieure à sa largeur.

12. Module optique (500) apte à mettre en oeuvre le procédé d'adaptation automatique d'un faisceau lumineux global selon l'une quelconque des revendications 1 à 9, **caractérisé en ce qu'**un élément du cache mobile (300) apte à modifier le faisceau lumineux (503) est constitué par une plaque occultante (306) présentant une ouverture (307), notamment une fente de forme sensiblement rectangulaire, ladite plaque occultante (306) étant apte à ne laisser passer le faisceau lumineux qu'au niveau de ladite fente (307).

13. Projecteur de véhicule automobile comprenant au moins un module optique selon l'une quelconque des revendications 10 à 12.

14. Véhicule automobile (100) apte à mettre en oeuvre le procédé selon l'une au moins des revendications 1 à 9.

15. Véhicule automobile (100) apte à mettre en oeuvre le procédé selon l'une au moins des revendications 8 ou 9, **caractérisé en ce que** la dite partie oblique (803 ; 919) est située à gauche de ladite plaque occultante (801 ; 917) dans l'un des modules optiques et à droite de ladite plaque occultante (801 ; 917) dans l'autre module optique.
